# FASCICULE DE BREVET EUROPEEN

(11) **EP 1 837 260 B1**
(45) Date de publication et mention de la délivrance du brevet: **03.09.2008**
(21) Numéro de dépôt: 07300877.3
(22) Date de dépôt: 19.03.2007
(51) Int. Cl.: B60S 1/52, B60S 1/34

(54) **Dispositif de lavage alternatif pour essuie-vitre à déplacement linéaire et véhicule automobile comportant une lunette arrière équipée d'un tel dispositif**
Alternative Scheibenwaschvorrichtung mit linearer Bewegung und Kraftfahrzeug, das eine mit einer solchen Vorrichtung ausgestattete Heckscheibe umfasst
Alternative washing device for a windscreen wiper with linear movement and automobile comprising a rear window equipped with such a device

(30) Priorité: 24.03.2006 FR 0602603
(43) Date de publication de la demande: 26.09.2007
(73) Titulaire: Peugeot Citroën Automobiles SA, 78140 Vélizy-Villacoublay (FR)
(72) Inventeur: Jeuffe, Gérard, 78580, BAZEMONT (FR)

(56) Documents cités:
- WO-A-02/092237
- FR-A- 2 220 145
- FR-A1- 2 734 533

## Description

La présente invention est relative à un dispositif pour le lavage par un essuie-vitre à déplacement linéaire d'une paroi vitrée, et en particulier de la paroi vitrée de la lunette arrière d'un véhicule automobile.

Les lunettes arrière de véhicule automobile comportent des parois vitrées qu'il est souhaitable de pouvoir laver et essuyer. Pour cela, on utilise des essuie-glaces oscillants et des dispositifs de projection d'eau qui sont en général situés à la partie inférieure de la paroi vitrée de la lunette arrière. Ces dispositifs présentent l'inconvénient de ne pas conduire à un lavage ou un nettoyage complet de la surface de la vitre, car, en général, ils ne permettent de nettoyer qu'un secteur circulaire.

Le document FR-A-2 220 145 décrit un dispositif de lavage alternatif pour essuie-vitre selon le préambule de la revendication 1.

Le but de la présente invention est de remédier à cet inconvénient en proposant un moyen de lavage d'une paroi vitrée, et en particulier la paroi vitrée de la lunette arrière d'un véhicule automobile, qui nettoie bien l'ensemble de la surface vitrée.

A cet effet , l'invention a pour objet un dispositif de lavage pour essuie vitre à déplacement linéaire du type comportant un chariot porte balai d'essuyage monté mobile dans un rail s'étendant le long d'une arête d'une surface vitrée, le chariot étant entraîné par un moyen d'entraînement. Le chariot comprend un premier canal d'alimentation d'une buse permettant de générer au moins un jet de liquide de lavage d'un premier côté du balai d'essuyage et un deuxième canal d'alimentation d'une buse permettant de générer au moins un jet de liquide de lavage d'un deuxième côté du balai d'essuyage, lesdits canaux débouchant dans une glissière dans laquelle un piston creux comportant une lumière latérale, relié par une liaison hydraulique une source de liquide de lavage, est monté mobile entre une première position dans laquelle la lumière latérale est en regard du premier canal d'alimentation d'une buse et une deuxième position dans laquelle la lumière latérale est en regard du deuxième canal d'alimentation d'une buse, de façon à pouvoir générer alternativement un jet de liquide de lavage d'un premier côté et d'un deuxième côté du balai d'essuyage selon le sens de déplacement du chariot porte balai d'essuyage.

De préférence, ce dispositif comporte, en outre, un moyen élastique de rappel du piston entre une première position et une deuxième position.

Le moyen de liaison hydraulique est par exemple un tuyau télescopique ou peut comprendre un tuyau souple dont une extrémité est reliée par un joint tournant à une source de liquide de lavage et peut s'enrouler autour d'un arbre d'un moyen d'enroulement/ déroulement à rappel élastique.

Le chariot porte balai d'essuyage est entraîné par un moyen d'entraînement pouvant comprendre une crémaillère souple, entraînée par un moyen d'entraînement motorisé.

La surface vitrée est par exemple la vitre de lunette arrière d'un véhicule automobile.

L'invention concerne également un véhicule automobile ayant une lunette arrière, qui comprend un dispositif de lavage de la vitre de la lunette arrière selon l'invention.

L'invention va maintenant être décrite de façon plus précise mais non limitative en regard des figures annexées, dans lesquelles :
- la figure 1 est une vue schématique d'ensemble d'un dispositif de lavage et d'essuyage de la lunette arrière d'un véhicule automobile, à déplacement linéaire.
- la figure 2 est une vue agrandie schématique partiellement en coupe du chariot porte-balai d'essuyage d'un dispositif de lavage et d'essuyage de la lunette arrière d'un véhicule automobile, à déplacement linéaire, dans une première position.

La figure 3 est une vue schématique partiellement en coupe d'un chariot porte-balai d'essuie-vitre et d'un dispositif de lavage et d'essuyage de la lunette arrière d'un véhicule automobile, à déplacement linéaire, dans une deuxième position.

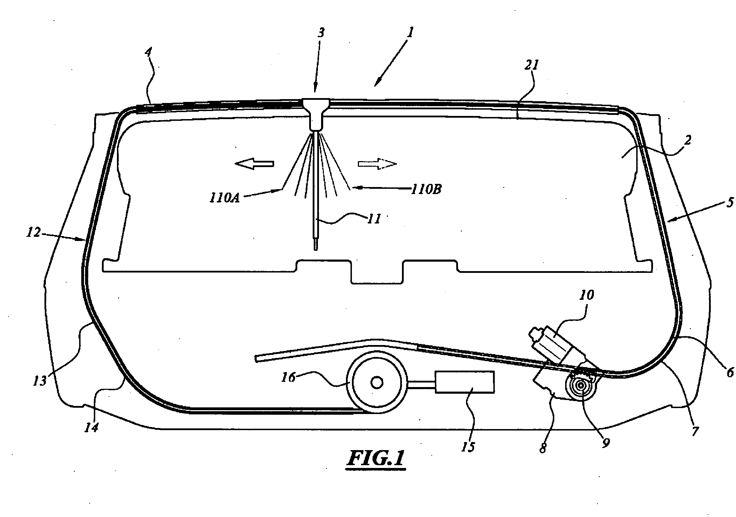

Le dispositif, repéré généralement par 1 à la figure 1, de lavage alternatif et d'essuyage de la paroi vitrée 2 de la lunette arrière d'un véhicule automobile, comprend un chariot 3 se déplaçant le long de l'arête supérieure horizontale 21 de la paroi vitrée 2 en étant guidé par un rail de guidage 4.

Le chariot 3 est entraîné par un moyen d'entraînement, repéré généralement par 5, constitué d'une crémaillère souple 6 se déplaçant dans une gaine 7, entraînée par un moyen d'entraînement motorisé 8 comportant un pignon 9 s'engrainant sur la crémaillère souple 6, entraîné par un moteur réducteur 10.

Le chariot 3 porte un balai d'essuyage 11 et peut entraîner ce balai dans un mouvement linéaire alternatif d'un bord à l'autre de la paroi vitrée.

Le chariot 3 est alimenté en liquide de lavage par un moyen de liaison hydraulique 12 constitué d'un tuyau 13 se déplaçant dans une gaine 14 et relié à une source de liquide de lavage 15 constitué par exemple d'un réservoir et d'une pompe, par l'intermédiaire d'un moyen de liaison 16, qui peut être un moyen d'enroulement/ déroulement du tuyau 13, comportant un moyen de rappel élastique. Le moyen d'enroulement/ déroulement du tuyau permet de faire varier la longueur du moyen de liaison hydraulique en fonction du déplacement du chariot.

Ainsi alimenté en liquide de lavage, le chariot 3 peut générer des jets d'arrosage 110A et 110B pour arroser la surface vitrée 2. Le jet d'arrosage 110A étant situé d'un côté du balai d'essuie-glace et le jet d'arrosage 110B étant situé de l'autre côté du balai d'essuie-glace 11.

Le chariot 3 dispose de moyens qui vont être décrits ultérieurement qui permettent d'alimenter alternativement les moyens d'arrosage qui créés des jets d'arrosage 110A et 110B en fonction du sens de déplacement du chariot 3, et donc du balai d'essuie-glace 11.

En effet, pour assurer un bon essuyage de la vitre, il est souhaitable que l'arrosage se fasse en avant du balai d'essuie-glace par rapport au mouvement de celui-ci.

Afin de pouvoir générer des jets d'arrosage 110A et 110B disposés tantôt d'un côté tantôt de l'autre du balai d'essuie-glace 11, le chariot porte balai d'essuie-glace 3 comporte deux canaux d'alimentation des jets d'arrosage 31A et 31 B qui débouchent à l'extrémité d'un bras support 32 du balai d'essuie-glace 11, de part et d'autre du balai d'essuie-glace.

Ces canaux 31A et 31 B communiquent avec un distributeur qui permet d'alimenter alternativement le canal 31A et le canal 31 B en fonction du sens de déplacement du chariot 3.

Le distributeur est constitué d'un embout 34 fixé à l'extrémité du tuyau 13 d'alimentation en liquide de lavage. Cet embout 34 est monté mobile à l'intérieur d'un logement prévu dans le chariot porte-balai d'essuie-glace 3 qui constitue une glissière 35 et dans lequel débouchent les canaux 31A et 31 B prévus dans le chariot 3. L'embout 34 de forme généralement cylindrique comporte une cavité 36 en communication directe avec le tuyau 13. La cavité 36 comporte sur sa paroi latérale une lumière 37 qui, lorsque l'embout 34 se déplace, peut se positionner alternativement en face du canal 31A ou en face du canal 31B.

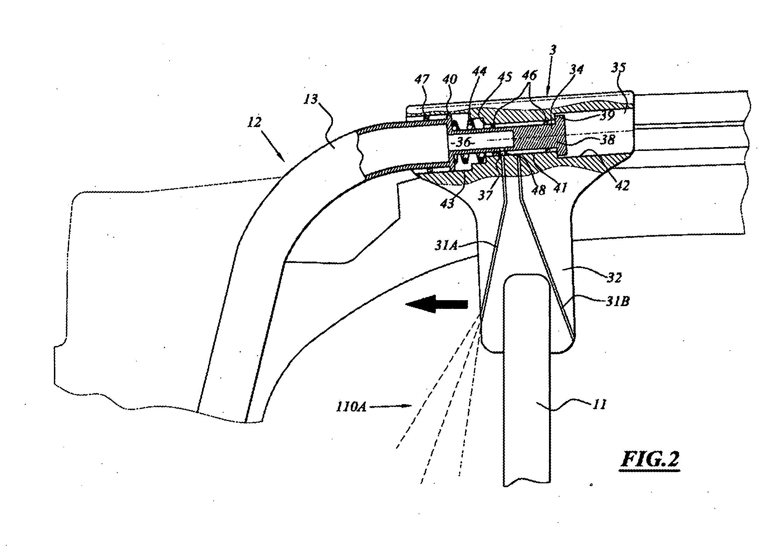

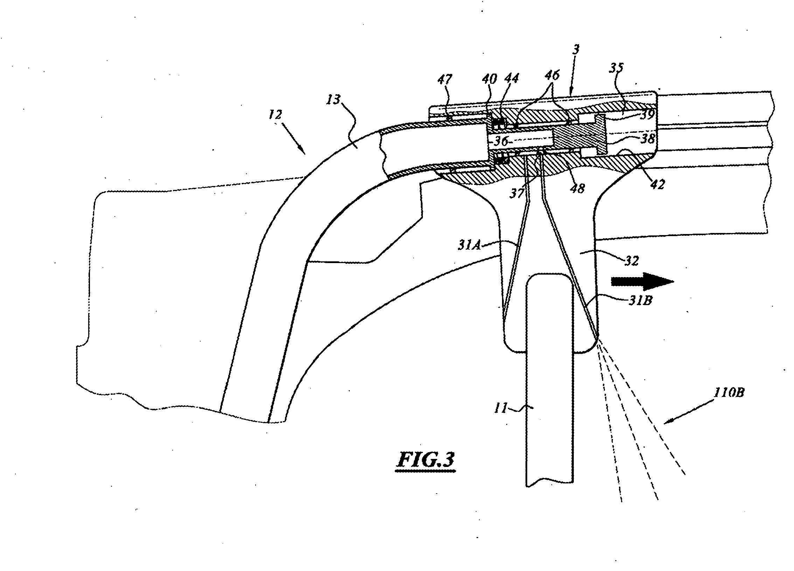

Lorsque la lumière 37 est en face du canal 31A comme cela est représenté à la figure 2, le canal 31A est alimenté en liquide de lavage et génère ainsi un jet 110A. Lorsque la lumière 37 est en face du canal 31 B, comme cela est représenté à la figure 3, le canal 31 B est alimenté en liquide de lavage, ce qui génère le jet 110B.

L'embout 34 qui constitue un piston creux relié par la liaison hydraulique 12 à la source de liquide de lavage 15, comporte un corps cylindrique 38 comportant à ses deux extrémités des épaulements 39 et 40. Le corps cylindrique 38 coulisse dans une portion cylindrique 41 de la glissière 35, de diamètre comparable au diamètre du corps cylindrique 38 mais de longueur plus faible.

La portion cylindrique 41 se prolonge à ses deux extrémités par des portions de plus grands diamètres 42 et 43 dans lesquels les épaulements d'extrémité 39 et 40 de l'embout peuvent se déplacer. La longueur du corps cylindrique 38 étant supérieure à la longueur de la portion de petit diamètre 41, l'embout 34 est mobile entre deux positions représentées aux figures 2 et 3. Dans une première position dans laquelle l'embout est décalé vers la partie gauche de la figure, la lumière 37 est en regard de l'entrée du canal 31A. Dans une deuxième position représentée à la figure 3, l'embout est décalé vers la droite de la figure et la lumière 37 est en regard de l'entrée du canal 31B.

En outre, un ressort 44 est disposé à l'intérieur de la portion 43 de la glissière 35 entre l'épaulement 40 de l'embout et un épaulement 45 à la jonction entre les portions 43 et 41 de diamètres différents. Ce ressort permet de faire en sorte que l'embout 34 se positionne d'un côté ou se positionne de l'autre selon que le chariot 3 est tiré pour se déplacer dans un sens ou est poussé pour se déplacer dans l'autre sens.

Enfin, pour assurer l'étanchéité du dispositif, des joints 46, 47, sont prévus autour du corps cylindrique 38 de l'embout 34, et autour de l'extrémité du tuyau d'alimentation en liquide d'arrosage 13.

En outre, il est prévu un joint 48, à l'extrémité de la lumière 37 d'alimentation des canaux 31A et 31 B. Ce joint 48 est un joint qui assure l'étanchéité tout en permettant le frottement le long de la portion cylindrique 41.

Dans le mode de réalisation qui vient d'être décrit, l'alimentation en liquide d'arrosage est fait par l'intermédiaire d'un tuyau qui, à une de ses extrémités, s'enroule sur un enrouleur/ dérouleur à rappel élastique, muni d'un joint tournant. Mais, l'alimentation en liquide d'arrosage peut être réalisé par tout autre moyen qui peut être par exemple un tuyau télescopique constitué d'un premier tuyau qui glisse à l'intérieur d'un deuxième tuyau de diamètre plus important et qui comporte à une de ses extrémités un joint à travers lequel le tuyau intérieur glisse.

De même, tout moyen d'entraînement du chariot peut être envisagé par l'homme du métier.

Le chariot 3 porte un balai d'essuie-glace est monté mobile en translation dans le rail 4 non représenté en détail mais que l'homme du métier peut aisément imaginer. Le chariot 3 comporte par exemple un patin qui coulisse dans une gorge prévue à l'intérieur du rail 4 et qui s'étend sur toute la longueur de ce rail. On peut d'ailleurs prévoir plusieurs gorges, une gorge assurant le guidage, l'autre gorge assurant le maintien du chariot, pour empêcher en particulier son basculement. Cette gorge assure le guidage du chariot 3.

Ce dispositif, qui peut être utilisé pour laver et essuyer tout type de paroi vitrée, est particulièrement adapté au lavage et à l'essuyage de la paroi vitrée de la lunette arrière d'un véhicule automobile.

## Revendications

1. Dispositif (1) de lavage alternatif pour essuie vitre à déplacement linéaire du type comportant un chariot (3) porte balai d'essuyage monté mobile dans un rail (4) s'étendant le long d'une arête (21) d'une surface vitrée (2), le chariot (3) étant entraîné par un moyen d'entraînement (5), et comprenant un premier canal (31A) d'alimentation d'une buse permettant de générer au moins un jet (110A) de liquide de lavage d'un premier côté du balai d'essuyage (11) et **caractérisé en ce que** le chariot (3) comprend un deuxième canal (31 B) d'alimentation d'une buse permettant de générer au moins un jet (110B) de liquide de lavage d'un deuxième côté du balai d'essuyage (11), lesdits canaux débouchant dans une glissière (35) dans laquelle un piston creux (34) comportant une lumière latérale (37), relié par une liaison hydraulique (12) à une source de liquide de lavage (15), est monté mobile entre une première position dans laquelle la lumière latérale (37) est en regard du premier canal (31A) et une deuxième position dans laquelle la lumière latérale (37) est en regard du deuxième canal (31 B), de façon à pouvoir générer alternativement un jet de liquide de lavage d'un premier côté et d'un deuxième côté du balai d'essuyage (11) selon le sens de déplacement du chariot porte balai d'essuyage.

2. Dispositif selon la revendication 1, **caractérisé en ce qu'**il comporte, en outre, un moyen élastique (44) de rappel du piston (34) entre une première position et une deuxième position.

3. Dispositif selon l'une quelconque des revendications 1 ou 2, **caractérisé en ce que** le moyen de liaison hydraulique (12) est un tuyau télescopique.

4. Dispositif selon l'une quelconque des revendications 1 ou 2, **caractérisé en ce que** le moyen de liaison hydraulique (12) comprend un tuyau souple (13) dont une extrémité est reliée par un joint tournant à une source (15) de liquide de lavage et peut s'enrouler autour d'un arbre d'un moyen (16) d'enroulement/ déroulement à rappel élastique.

5. Dispositif selon l'une quelconque des revendications 1 à 4, **caractérisé en ce que** le chariot (3) porte balai d'essuyage est entraîné par un moyen d'entraînement (5) comprenant une crémaillère souple (6), entraînée par un moyen d'entraînement motorisé (8).

6. Dispositif selon l'une quelconque des revendications 1 à 5, **caractérisé en ce que** la surface vitrée (2) est la vitre de lunette arrière d'un véhicule automobile.

7. Véhicule automobile ayant une lunette arrière, **caractérisé en ce qu'**il comprend un dispositif de lavage de la vitre de la lunette arrière selon l'une quelconque des revendications 1 à 6.

## Claims

1. A alternating washing device (1) for a linear-movement window wiper of the type comprising a wiper blade-holder carriage (3) mounted movably in a rail (4) extending along a ridge (21) of a glazed surface (2), the carriage (3) being driven by a drive means (5), and comprising a first channel (31A) for supplying a nozzle making it possible to generate at least one jet (110A) of a washing liquid on a first side of the wiper blade (11) and **characterized in that** the carriage (3) comprises a second channel (31B) for supplying a nozzle making it possible to generate at least one jet (110B) of washing liquid on a second side of the wiper blade (11), the said channels leading into a runner (35) in which a hollow piston (34) comprising a side opening (37), connected via a hydraulic connection (12) to a source of washing liquid (15), is mounted movably between a first position in which the side opening (37) is in line with the first channel (31A) and a second position in which the side opening (37) is in line with the second channel (31B), so as to be able to generate in an alternating manner a jet of washing liquid on a first side and on a second side of the wiper blade (11) depending on the direction of movement of the wiper blade-holder carriage.

2. Device according to Claim 1, **characterized in that** it also comprises an elastic return means (44) of the piston (34) between a first position and a second position.

3. Device according to either one of Claims 1 or 2, **characterized in that** the hydraulic connection means (12) is a telescopic pipe.

4. Device according to either one of Claims 1 or 2, **characterized in that** the hydraulic connection means (12) comprises a flexible pipe (13) of which one end is connected via a rotating seal to a source (15) of washing liquid and may be wound around a shaft of an elastic-return winding/unwinding means (16).

5. Device according to any one of Claims 1 to 4, **characterized in that** the wiper blade-holder carriage (3) is driven by a drive means (5) comprising a flexible rack (6) driven by a motorized drive means (8).

6. Device according to any one of Claims 1 to 5, **characterized in that** the glazed surface (2) is the window of the rear opening of a motor vehicle.

7. Motor vehicle having a rear window, **characterized in that** it comprises a device for washing the glass of the rear window according to any one of Claims 1 to 6.

## Patentansprüche

1. Wechsel-Waschvorrichtung (1) für Scheibenwischer mit geradliniger Verlagerung des Typs, der einen Wischerblatt-Trägerschlitten (3) enthält, der in einer Schiene (4), die sich längs einer Kante einer Scheibenoberfläche (2) erstreckt, beweglich angebracht ist, wobei der Schlitten (3) durch ein Antriebsmittel (5) angetrieben wird und einen ersten Kanal (31A) für die Versorgung einer Düse enthält, die ermöglicht, wenigstens einen Waschflüssigkeitsstrahl auf einer ersten Seite des Wischerblatts (11) zu erzeugen, **dadurch gekennzeichnet, dass** der Schlitten (3) einen zweiten Versorgungskanal (31B) für eine Düse enthält, die ermöglicht, wenigstens einen Waschflüssigkeitsstrahl (110B) auf einer zweiten Seite des Wischerblatts (11) zu erzeugen, wobei die Kanäle in eine Gleitbahn (35) münden, in der ein Hohlkolben (34), der ein seitliches Langloch (37) aufweist und über eine Hydraulikverbindung (12) mit einer Waschflüssigkeitsquelle (15) verbunden ist, so angebracht ist, dass er zwischen einer ersten Position, in der sich das seitliche Langloch (37) gegenüber dem ersten Kanal (31A) befindet, und einer zweiten Position, in der sich das seitliche Langloch (37) gegenüber dem zweiten Kanal (31B) befindet, beweglich ist, derart, dass ein Waschflüssigkeitsstrahl abwechselnd auf einer ersten Seite und auf einer zweiten Seite des Wischerblatts (11) je nach Verlagerungsrichtung des Wischerblatt-Trägerschlittens erzeugt werden kann.

2. Vorrichtung nach Anspruch 1, **dadurch gekennzeichnet, dass** sie außerdem ein elastisches Mittel (44) für die Rückstellung des Kolbens (34) zwischen einer ersten Position und einer zweiten Position enthält.

3. Vorrichtung nach einem der Ansprüche 1 oder 2, **dadurch gekennzeichnet, dass** das Hydraulikverbindungsmittel (12) ein Teleskopschlauch ist.

4. Vorrichtung nach einem der Ansprüche 1 oder 2, **dadurch gekennzeichnet, dass** das Hydraulikverbindungsmittel (12) einen nachgiebigen Schlauch (13) enthält, wovon ein Ende durch eine Drehverbindung mit einer Waschflüssigkeitsquelle (15) verbunden ist und sich um eine Welle eines Aufwickel-/Abwickelmittels (16) mit elastischer Rückstellung aufwickeln kann.

5. Vorrichtung nach einem der Ansprüche 1 bis 4, **dadurch gekennzeichnet, dass** der Wischerblatt-Trägerschlitten (3) durch ein Antriebsmittel (5) angetrieben wird, das eine nachgiebige Zahnstange (6) enthält, die durch ein motorisiertes Antriebsmittel (6) angetrieben wird.

6. Vorrichtung nach einem der Ansprüche 1 bis 5, **dadurch gekennzeichnet, dass** die Glasoberfläche (2) die Heckscheibe eines Kraftfahrzeugs ist.

7. Kraftfahrzeug, das eine Heckscheibe besitzt, **dadurch gekennzeichnet, dass** es eine Waschvorrichtung für die Heckscheibe nach einem der Ansprüche 1 bis 6 enthält.
